# EUROPÄISCHE PATENTSCHRIFT

(11) **EP 0 522 498 B1**
(45) Veröffentlichungstag und Bekanntmachung des Hinweises auf die Patenterteilung: **01.05.1996**
(21) Anmeldenummer: 92111488.0
(22) Anmeldetag: 07.07.1992
(51) Int. Cl.: B23Q 3/155

(54) **Werkzeugmagazin mit zugeordneter Werkzeugwechseleinheit**
Tool magazine with tool changer
Magazine d'outil avec changeur d'outil

(30) Priorität: 10.07.1991 DE 4122821
(43) Veröffentlichungstag der Anmeldung: 13.01.1993
(73) Patentinhaber: DÖRRIES SCHARMANN GmbH, D-41236 Mönchengladbach (DE)
(72) Erfinder: Kessler, Kurt, W-8000 München 80 (DE)
(74) Vertreter: Dipl.-Phys.Dr. Manitz Dipl.-Ing. Finsterwald Dipl.-Ing. Grämkow Dipl.Chem.Dr. Heyn Dipl.Phys. Rotermund Morgan, B.Sc.(Phys.)

(56) Entgegenhaltungen:
- EP-A- 0 104 866
- EP-A- 0 132 528
- EP-A- 0 174 455
- EP-A- 0 266 647
- EP-A- 0 278 324
- DE-A- 2 619 151
- DE-A- 3 441 653
- DE-A- 3 510 330
- DE-A- 3 618 959
- GB-A- 1 595 041
- US-A- 3 269 550
- US-A- 3 312 370
- US-A- 4 656 728
- ZEITSCHRIFT FüR WIRTSCHAFTLICHE FERTIGUNG Bd. 80, Nr. 9, 30. September 1985, Seite 56; 'LAGER- UND TRANSPORTSYSTEM FÜR WERKZEUGE'

## Beschreibung

Die Erfindung betrifft ein Werkzeugmagazin mit zugeordneter Werkzeugwechseleinheit, bestehend aus einem Vertikalregal mit einer Vielzahl von neben- und / oder übereinander angeordneten, als individuelle Trägereinheiten ausgebildeten Halterungen für Werkzeuge, Tastköpfe und dergleichen.

Ein Werkzeugmagazin dieser Art ist aus der EP-A 0 174 455 bekannt. Dieses Werkzeugmagazin besteht aus einem rechteckigen Grundrahmen, in den übereinander eine Mehrzahl von jeweils gleich ausgebildeten Zwischenrahmen eingesetzt werden. In die Zwischenrahmen wiederum können einzelne, jeweils quadratisch ausgebildete Trägereinheiten nebeneinander eingesetzt werden. Dieses Werkzeugmagazin läßt hinsichtlich des Bedürfnisses, noch mehr Werkzeuge, und zwar insbesondere Werkzeuge unterschiedlichster Art, auf kleinstmöglichem Raum unterzubringen, zu wünschen übrig.

Aufgabe der Erfindung ist es daher, ein Werkzeugmagazin der eingangs angegebenen Art zu schaffen, das eine optimal dichte Packung der Werkzeuge im Magazin ermöglicht, ein Arbeiten mit minimalen Wechselzeiten gestattet und trotz einfachen Aufbaus für alle Arten von Bearbeitungsmaschinen verwendet werden kann.

Gelöst wird diese Aufgabe im wesentlichen dadurch, daß das Vertikalregal eine tragende, als Rasterwand ausgebildete Rückwand aufweist, daß die Rasterwand mit einer Vielzahl von nach einem vorgebbaren Muster verteilten Kuppelelementen versehen ist, daß die Trägereinheiten jeweils mit zu den Kuppelelementen der Rasterwand komplementären Kuppelelementen ausgestattet sind, und daß die Trägereinheiten in frei wählbaren Positionen bei gegenseitigem Eingriff der Kuppelelemente mittels Befestigungsorganen an der Rasterwand fixierbar sind.

Dadurch, daß die individuellen Trägereinheiten jeweils einzeln postionsgenau an der Rasterwand fixiert werden können, ist es möglich, den im Vertikalregal zur Verfügung stehenden Raum optimal zu nutzen, da die Werkzeuge in Abhängigkeit von ihren Längs- und Breitenabmessungen gruppenweise zusammengefaßt bzw. platzoptimierend miteinander kombiniert werden können, wobei vorzugsweise sogar vorgesehen sein kann, bestimmte Werkzeuge horizontal und andere vertikal zu haltern, um durch eine Verschachtelung die bestmögliche Platzausnutzung zu erreichen und bei Maschinen mit Horizontal- und Vertikalspindeleinsatz Schwenkzeiten einzusparen.

Die individuellen Trägereinheiten können dabei sowohl einzeln an der Rasterwand positioniert als auch mittels Verbindungsschienen zu Kombinationseinheiten zusammengefaßt werden, was eine gemeinsame Handhabung dieser zusammengefaßten Einheiten ermöglicht. Beispielsweise kann eine solche Kombinationseinheit, in der mehrere indivduelle Trägereinheiten zusammengefaßt sind, als Einheit zu einem Voreinstellgerät gebracht und dort ein Vermessen der entsprechenden Werkzeuge vorgenommen werden.

Die indivuellen Trägereinheiten und in entsprechender Weise auch die daraus gebildeten Kombinationseinheiten werden mit der Rasterwand vorzugsweise verschraubt, wobei aber diese Verschraubung nur zur mechanischen Fixierung der jeweiligen Position dient, da die Lagegenauigkeit durch die ineinandergreifenden Kuppelelemente von Rasterwand und Trägereinheiten gewährleistet wird.

Um die Bestückung der Rasterwand weiter zu vereinfachen, können gegebenenfalls Vorfixierungsorgane, insbesondere in Form von Magneten, Schnapp-Rastelementen und dergleichen vorgesehen werden, die zwischen den Trägereinheiten und der Rasterwand wirksam sind.

Hinsichtlich der Halterung der Werkzeuge in den Trägereinheiten sind zwei Varianten vorgesehen. Gemäß der ersten Variante erfolgt die Halterung der Werkzeuge in den vorzugsweise aus Kunststoff bestehenden Trägereinheiten durch eine Kegel- oder Zylinderaufnahme mit parallel zur Befestigungsfläche der Trägereinheit an der Rasterwand verlaufender Achse. In diesem Falle ist der Werkzeugkegel optimal geschützt, und das Werkzeug wird über die Werkzeuggreifrille erfaßt. Diese Ausführungsform ermöglicht es, mit einer entsprechenden Zubringereinheit das jeweilige Werkzeug unmittelbar zwischen dem Magazin und der entsprechenden Spindel der jeweiligen Arbeitsmaschine zu transportieren und dabei gleichzeitig den Wechselvorgang durchzuführen. Ein derart ausgebildeter Entnahmegreifer übernimmt demgemäß gleichzeitig die sogenannte Doppelgreiferfunktion, wodurch eine erhebliche Einsparung erzielt werden kann.

Gemäß der zweiten Ausführungsvariante wird das jeweilige Werkzeug in der Trägereinheit mittels Rillenaufnahmen gehaltert, die eine freie Zugänglichkeit des Werkzeugkegels für einen entsprechend ausgebildeten Greifer gewährleisten. Dabei ist es besonders günstig, diese Aufnahme so auszubilden, daß sie sich bezüglich der Horizontalen unter einem eine Halterung des Werkzeugs durch Schwerkraft ermöglichenden Winkel öffnet.

Die Trägereinheiten sind vorzugsweise mit passiven Signalisierelementen ausgestattet, die abtastbar sind. Auf diese Weise kann nach erfolgter Bestückung des Magazins automatisch in einer Lernphase die Position der jeweiligen Trägereinheiten bzw. Werkzeuge erfaßt und die gewonnene Information für die weitere Programmierung verwendet werden. Durch diesen Lernschritt ist das Magazin für den Anwender optimal ausstattbar.

Eine für die Zusammenarbeit mit dem beschriebenen Werkzeugmagazin besonders geeignete Werkzeugwechseleinheit zeichnet sich dadurch aus, daß sie am Vertikalregal geführt und in einer zur Rasterwand parallelen Ebene sowie senkrecht zur Rasterwand verfahrbar ist und vorzugsweise eine Greiferzangenanordnung aufweist, die um eine zur Rasterwand senkrecht verlaufende Achse schwenkbar ist und senkrecht zur Bewegungsbahn des Greiferschlittens ein- und ausfahrbare Greifzangen besitzt.

Es wird auf diese Weise eine äußerst kompakte Gesamtanordnung von Werkzeugmagazin und Werkzeugwechseleinheit geschaffen, die es ermöglicht, mit einem Minimum an Aufwand alle erforderlichen Wechsel- und Bestückungsvorgänge durchzuführen und dabei gleichzeitig einen schnellen Wechselvorgang gewährleistet, da sich die Geschwindigkeiten der zu bestückenden NC-Maschine und der Wechseleinheit bei vielen Bewegungen unmittelbar überlagern können.

Von besonderem Vorteil ist es, wenn für die Schwenkbewegung der die Greiferzangen tragenden Greifergrundplatte kein eigener Schwenkantrieb benötigt wird, sondern wenn diese Schwenkbewegung aus der Linearbewegung des Greiferschlittens über entsprechende Kurven und in diese Kurven eingreifende steuerbare Bolzen abgeleitet wird. Damit ergibt sich auch eine vorteilhafte Gewichtsreduzierung, die im Hinblick auf den erforderlichen Verfahrweg des Greiferschlittens günstig ist.

Weitere vorteilhafte Merkmale und Ausgestaltungen der Erfindung sind in den Unteransprüchen angegeben.

Die Erfindung wird nachfolgend anhand von Ausführungsbeispielen unter Bezugnahme auf die Zeichnung näher erläutert; in der Zeichnung zeigt:
- Figur 1: eine schematische Vorderansicht eines Werkzeugmagazins mit zugeordneter Werkzeugwechselvorrichtung,
- Figur 2: eine schematische perspektivische Darstellung einer ersten Ausführungsform einer Trägereinheit für das Magazin nach Figur 1,
- Figur 3: eine schematische perspektivische Darstellung einer weiteren Ausführungsform einer Trägereinheit mit zugehöriger Greiferzange,
- Figur 4: eine schematische perspektivische Darstellung von zum Teil mit Werkzeugen bestückten, zu einer Kombinationseinheit zusammengefaßten Trägereinheiten sowie der Greiferzangen einer zugehörigen Entnahme- bzw. Wechseleinheit,
- Figur 5: eine schematische perspektivische Darstellung der einerseits mit dem Werkzeugmagazin und andererseits unmittelbar mit der Bearbeitungsmaschine zusammenwirkenden Werkzeugwechseleinheit,
- Figur 6: eine schematische Darstellung einer Variante des Schwenkantriebs für die die Greiferzangen tragende Grundplatte, und
- Figur 7: eine schematische perspektivische Ansicht einer Ausführungsvariante der Erfindung zur Doppelspindelbedienung.

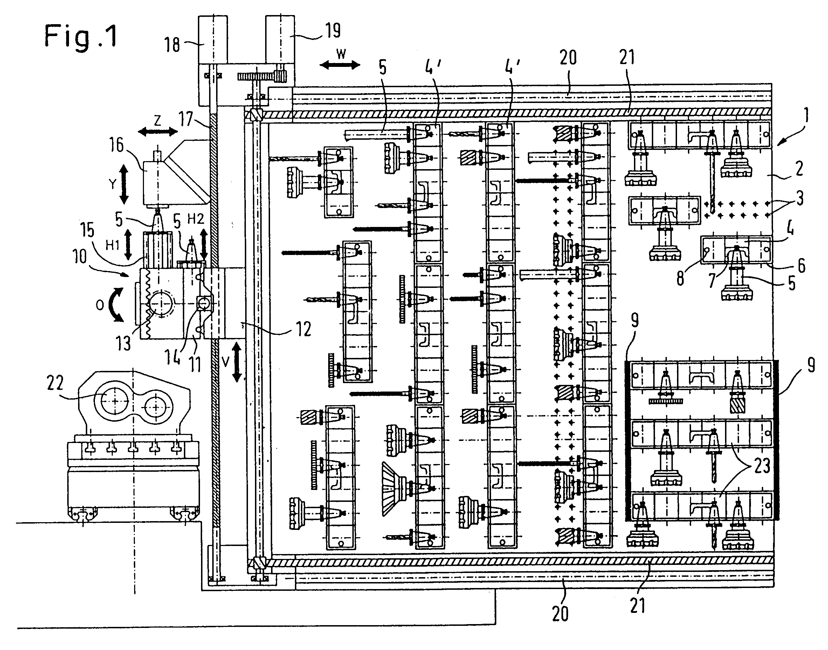

Figur 1 zeigt ein Werkzeugmagazin 1 in Form eines Vertikalregals, das mit einer Werkzeugwechseleinheit 10 kombiniert ist.

Das Werkzeugmagazin umfaßt eine in einem im einzelnen nicht zeichnerisch dargestellten Grundrahmen fixierte, stabil ausgebildete Rasterwand 2, die über ihre gesamte Fläche in vorgebbarer Weise mit Kuppelelementen 3 in Form von Bohrungen oder Bolzen versehen ist. In der Zeichnung sind nur einige Reihen solcher Kuppelelemente 3 gezeigt, aber es versteht sich von selbst, daß die Anordnung dieser Kuppelelemente 3 so getroffen werden kann, daß eine weitestgehende Freiheit in der Positionierung der Trägereinheiten 4 für Werkzeuge 5 erhalten wird.

Diese Trägereinheiten sind mit zu den Kuppelelementen 3 der Rasterwand 2 komplementären Kuppelelementen versehen und können somit über die miteinander zusammenwirkenden Kuppelelemente lagegenau positioniert und dann mittels Befestigungsorganen 8, zum Beispiel Schraubbolzen, an der Rasterwand 2 befestigt werden.

Grundsätzlich ist es möglich, die Trägereinheiten 4 einzeln an der Rasterwand zu befestigen, aber vorzugsweise werden jeweils mehrere Trägereinheiten 4 mittels einer Verbindungschiene 6 zu einer Kombination zusammengefaßt, die als eigenständige Einheit handhabbar und auch an der Rasterwand 2 positionierbar ist. Zur Erleichterung der Handhabung ist eine solche Kombinationseinheit 23 zweckmäßigerweise mit wenigstens einem Handgriff 7 versehen.

Ferner ist es möglich, mehrere Kombinationseinheiten 23 wiederum mittels vorzugsweise stirnseitig befestigbarer Koppelleisten 9 zu einer größeren Kombinationseinheit zusammenzufassen, wie sie im rechten unteren Teil des in Figur 1 gezeigten Regals schematisch dargestellt ist.

Die Kuppelelemente 3 und die entsprechenden Gegenelemente an den Trägereinheiten 4 sind vorzugsweise nach einer quadratischen Struktur angebracht, was es möglich macht, die Trägereinheiten 4 sowohl mit vertikaler Aufnahmeachse für die Werkzeuge 5 als auch mit horizontaler Aufnahmeachse für diese Werkzeuge 5 an der Rasterwand anzubringen. Trägereinheiten mit horizontaler Werkzeugaufnahme sind beispielsweise mit dem Bezugszeichen 4' gekennzeichnet.

Es ist ersichtlich, daß durch die Verwendung der beschriebenen Trägereinheiten in Verbindung mit der Rasterwand eine äußerst dichte Werkzeugpackung im Magazin möglich ist, da in Abhängigkeit von den jeweiligen Werkzeugen die gegenseitigen Abstände sowohl in horizontaler als auch in vertikaler Richtung veränderbar sind und damit durch entsprechende Verschachtelung der zur Verfügung stehende Raum optimal genutzt werden kann.

Die mit dem Werkzeugmagazin zusammenwirkende Werkzeugwechseleinheit ist am Werkzeugmagazin gelagert und kann über Führungen 20 und eine horizontale, zum Beispiel aus einer Zahnstangen-/Ritzelkombination bestehenden Antriebseinheit 21 in einer zur Rasterwand 2 parallelen Ebene horizontal und über eine entsprechende vertikale Antriebsspindel 17 auch vertikal bewegt werden, so daß jeder Punkt des Werkzeugmagazins angefahren werden kann. Dazu sind entsprechende Antriebseinheiten 18, 19 vorgesehen.

Senkrecht zur Rasterwand 2 kann die Werkzeugwechseleinheit 10 mittels eines Greiferschlittens 11 verfahren werden, der auf einem von der vertikalen Antriebsspindel 17 angetriebenen Kreuzschlitten 12 sitzt. Der Greiferschlitten 11 wird durch einen Antrieb 14 bewegt.

Um eine Greifergrundplatte, in der Greifzangenträger 15 geführt sind, verschwenken zu können, ist ein Schwenkantrieb 13 vorgesehen, der vom Greiferschlitten 11 getragen wird.

Oberhalb der Werkzeugwechseleinheit 10 sind in Figur 1 schematisch zwei Bearbeitungseinheiten 16 dargestellt, die durch die Werkzeugwechseleinheit mit Werkzeugen 5 bestückt werden können, wozu zur Durchführung des Einsetzens und Herausnehmens der Werkzeuge 5 in die entsprechende Aufnahmespindel die Greifzangenträger 15 quer zur Bewegungsrichtung des Greiferschlittens 11 entsprechend den Pfeilen H1 und H2 bewegbar sind.

Die in Figur 1 mit entsprechenden Doppelpfeilen angedeuteten Bewegungen in den Richtungen W, V, Y, Z, H sowie die Drehbewegung O können sich zumindest zeitweise bei der Durchführung der verschiedenen Arbeitsvorgänge überlagern, wodurch schnellere Wechselvorgänge ermöglicht werden.

Ein zu bearbeitendes Werkstück 22 ist in Figur 1 schematisch auf einer Palette aufgespannt dargestellt.

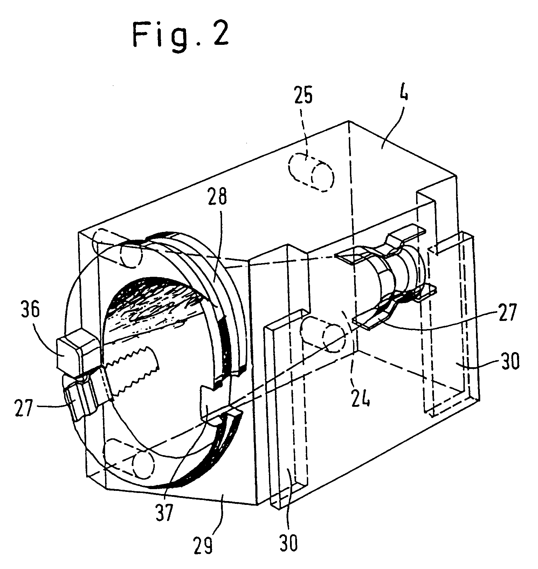

Figur 2 zeigt eine erste Ausführungsform einer Trägereinheit 4. Diese Trägereinheit 4 ist auf der zur Befestigung an der Rasterwand 2 bestimmten Seite mit Kuppelelementen 25 versehen, die mit den entsprechend ausgebildeten komplementären Kuppelelementen 3 der Rasterwand 2 zusammenwirken und eine exakte Positionierung der Trägereinheit 4 an der Rasterwand 2 sicherstellen.

Die Trägereinheit 4 besitzt einen insbesondere kegelförmigen Aufnahmeraum 24 für den Werkzeugkegel, und die Achse dieser Aufnahme verläuft dabei parallel zu der die Kuppelelemente tragenden Befestigungsfläche. Die Halterung des Werkzeugs in der Trägereinheit 4 wird durch vordere und hintere Halteschnapper 27 gewährleistet, die zum einen in die Werkzeuggreifrille 28 und zum anderen rückseitig in die entsprechenden Anzugszapfen des Werkzeugkegels eingreifen. Es ist zu sehen, daß die Trägereinheit 4 stirnseitig eine abgeschrägte Wandung 29 aufweist, und diese Abschrägung gewährleistet eine gute Zugänglichkeit der Werkzeuggreifrille 28 für die Handbestückung. Zu sehen sind in der schematischen Darstellung nach Figur 2 auch die Orientierungsnase 36 sowie die Orientierungsausnehmung 37 an dem die Werkzeuggreifrille 28 aufweisenden Ringteil des Werkzeughaltekegels.

Um mehrere Trägereinheiten 4 zusammenfassen zu können, können diese Trägereinheiten mit Hintergriffen 30 ausgestattet sein, die eine bajonettartige Verbindung mit einer entsprechenden Verbindungsschiene ermöglichen.

Werden Trägereinheiten von der in Figur 2 gezeigten Ausführungsform verwendet, so können die in diesen Trägereinheiten 4 gehaltenen Werkzeuge direkt über die Werkzeuggreifrille 28 erfaßt und ohne Zwischenübergabe an weitere Einheiten unmittelbar in die Spindel einer Bearbeitungsmaschine eingesetzt werden.

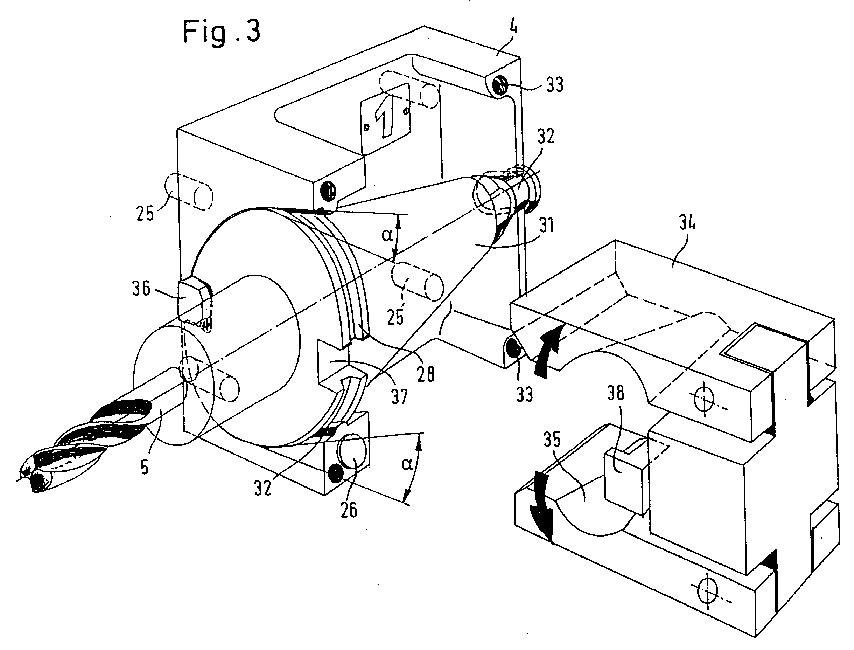

Figur 3 zeigt eine Ausführungsvariante einer Trägereinheit 4, bei der die Halterung des Werkzeugs in der Trägereinheit nicht über den Werkzeugkegel, sondern über die Werkzeuggreifrille 28 und die am Ende des Kegels vorgesehene Halterille 32 erfolgt. Der Werkzeugkegel 31 ist bei dieser Ausführungsvariante für eine Greiferzange 34 frei zugänglich. Diese Greiferzange 34 ist mit einer komplementär geformten Konusaufnahme 35 versehen und weist ferner ein Zentrierelement 38 auf, das mit der entsprechenden Orientierungsausnehmung 37 am Werkzeugkegelringteil zusammenwirkt.

Von besonderer Bedeutung ist bei dieser Ausführungsform, daß sich die Ringaufnahme unter einem solchen Winkel α bezüglich der Horizontalen öffnet, daß der Werkzeugkegel in der Aufnahme durch Schwerkraft gehalten wird und damit auch problemfrei eingesetzt und entnommen werden kann. Klemmeinrichtungen sind nicht erforderlich.

Um eine Befestigung der Trägereinheit 4 an der Rasterwand 2 zu ermöglichen und mehrere Trägereinheiten mittels einer Verbindungsschiene koppeln zu können, sind mehrere Fixierungsbohrungen 33 vorgesehen, durch die beispielsweise Schraubbolzen geführt werden können, wenn die Zentrierung der Trägereinheit 4 über die Kuppelelemente 25 bezüglich der Sollposition an der Rasterwand 2 erreicht ist.

Diese in Figur 3 gezeigte Ausführungsform einer Trägereinheit ermöglicht ein Arbeiten mit konventionellen Greifeinrichtungen, welche den Werkzeugkegel erfassen, das Werkzeug in einer Übergabestation an einen Werkzeugwechsler übergeben, der das Werkzeug an der Werkzeuggreifrille erfaßt und dann in die entsprechende Spindel einsetzt.

An der Trägereinheit 4 ist schematisch noch ein Signalisierelement 26 angedeutet, das auch bei der Ausführungsvariante nach Figur 2 verwendet werden kann. Mittels eines derartigen passiven Signalisierungselements, zum Beispiel eines Magnetelements, eines reflektierenden Elementes oder dergleichen, ist es möglich, nach erfolgter Bestückung eines Werkzeugregals mit Trägereinheiten 4, 4' eine Abtastung sämtlicher möglicher Positionen des Regals vorzunehmen und auf diese Weise festzustellen, welche Positionen bestückt sind, so daß die gewonnenen Informationen dann bei der weiteren Programmierung verwendet werden können.

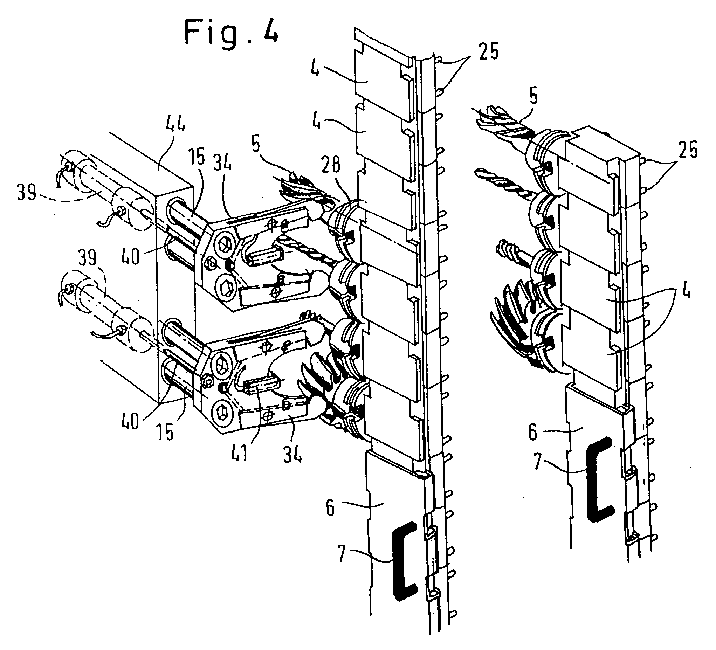

Figur 4 zeigt in schematisierter Form das Zusammenwirken einer Greifereinheit mit Trägereinheiten 4, die zum Teil mit horizontal gerichteten Werkzeugen 5 bestückt sind. Die Rasterwand, an der diese Trägereinheiten 4 über die Kuppelelemente 25 positioniert sind, ist in Figur 4 nicht dargestellt.

Die Figur 4 zeigt auch die Zusammenfassung mehrerer Trägereinheiten 4 mittels einer als Bajonettschiene ausgebildeten Verbindungsschiene 6, die mit Handgriffen 7 versehen ist.

Die Greifvorrichtung besteht aus einer Greifergrundplatte 44, in der Greifzangenträger 15 verschiebbar und über Betätigungszylinder 39 antreibbar gelagert sind. An den Enden der Greifzangenträger sind die Greifzangen 34 fest angebracht, welche schwenkbar gelagerte Greifelemente aufweisen, welche dazu bestimmt sind, mit der Werkzeuggreifrille 28 der Werkzeuge zusammenzuwirken.

Diese Greifelemente sind durch Federn in Schließstellung vorgespannt und können bei ausgefahrenen Greifzangenträgern 15 bei entsprechender Verschiebung der Greifergrundplatte 24 in die Werkzeuggreifrille 28 einschnappen. Mit Beginn des Rückzugs der Greifzangenträger 15 bewegt sich ein stationär an der Greifergrundplatte 24 angebrachter Schließbolzen 40 zwischen die beiden Greifelemente und blockiert diese Elemente in der Schließstellung, so daß in diesem Moment eine feste Kupplung zwischen der Greifzange und dem Werkzeug erreicht ist. Durch die Einfahrbewegung des Greifzangenträgers 15 wird das Werkzeug aus der Trägereinheit 4 entnommen, und in der umgekehrten Richtung wird das Werkzeug in die Trägereinheit 4 eingesetzt.

Gemäß einer Ausführungsvariante der Erfindung sind die Greifzangen 34 mit einem Lesekopf 41 ausgerüstet, der es ermöglicht, Daten abzufragen, die in einem entsprechenden Speicherelement werkzeugbezogen aufgezeichnet sind. Dieses Speicherelement kann am Werkzeug oder an der Trägereinheit vorgesehen sein.

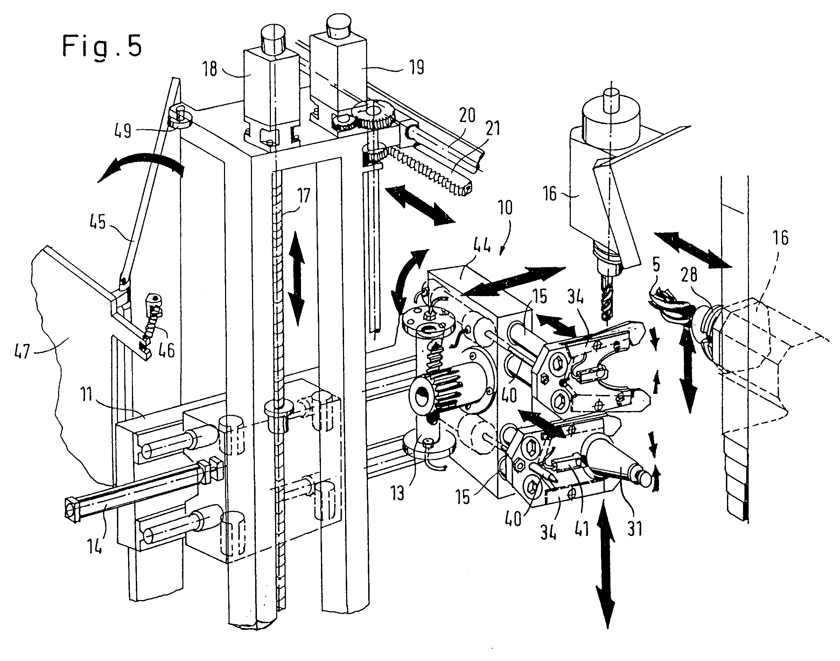

Figur 5 zeigt eine perspektivische Teil-Darstellung einer Werkzeugwechseleinheit zusammen mit den durch Pfeile symbolisierten Bewegungsmöglichkeiten im Bereich der Bearbeitungsmaschine bzw. des zu bedienenden Spindelkopfes 16. Dabei ist der Spindelkopf 16 zum einen in vertikaler Position und zum anderen in horizontaler Position dargestellt, da in beiden Positionen die Wechselvorgänge durchgeführt werden können.

Gleiche Teile sind in Figur 5 mit gleichen Bezugszeichen wie in den vorhergehend erläuterten Figuren bezeichnet. Die Greifergrundplatte 44 ist mittels des Greiferschlittens 11 und des zugehörigen Antriebs 14 zum einen horizontal verfahrbar und zum anderen über den Schwenkantrieb 13 um 90° verschwenkbar, so daß sowohl eine Horizontalspindel als auch eine Vertikalspindel bedient werden kann. Diese Verschwenkung ist im übrigen in analoger Weise im Bereich des Werkzeugmagazins erforderlich, wenn dort die Werkzeuge in den Trägereinheiten mit horizontaler oder vertikaler Achse gehaltert sind.

Zu erkennen sind wiederum die Greifzangenträger 15 mit zugehöriger Greifzange 34 sowie die Schließbolzen 40. Die in der Zeichnung obere Greifzange 34 befindet sich im ausgefahrenen Zustand und ist bereit, das horizontal gerichtete Werkzeug 5 über die Werkzeuggreifrille 28 zu erfassen.

Die untere Greifzange ist eingefahren, mit einem Werkzeug bestückt und durch den Schließbolzen 40 blockiert. Hat die obere Greifzange 24 das sich in der Spindel 16 befindende Werkzeug 5 durch eine entsprechende Rückzugsbewegung, verbunden mit der Blockierung der Greifzange durch den Schließbolzen 40, aus der Spindel 16 gezogen, dann werden die Greifergrundplatte 44 und die Werkzeugspindel 16 vorzugsweise unter Überlagerung der jeweiligen Bewegungen relativ zueinander bewegt, so daß dann durch eine entsprechende Ausfahrbewegung das in der unteren Greiferzange 34 gehaltene Werkzeug in die Spindel eingesetzt werden kann.

Mittels dieser Werkzeugwechselvorrichtung kann dann das aus der Spindel 16 entnommene Werkzeug unmittelbar in das Magazin zurückgeführt werden, wenn dieses Magazin mit Trägereinheiten entsprechend der in Figur 2 gezeigten Ausführungsform ausgestattet ist.

Ein weiterer Vorteil der erfindungsgemäßen Anordnung besteht darin, daß die an der Kabinenwand 47 angelenkte Werkzeugwechslerklappe 45, die mittels einer Schließfeder 46 in die geschlossene Lage vorgespannt ist, unmittelbar durch die Werkzeugwechselvorrichtung geöffnet wird und nach erfolgtem Wechselvorgang wieder in die Schließlage zurückkehrt. Dazu ist auch eine in Figur 5 gezeigte Schließrolle 49 vorgesehen. Auf diese Weise entfallen teure Zylinder und Türführungen.

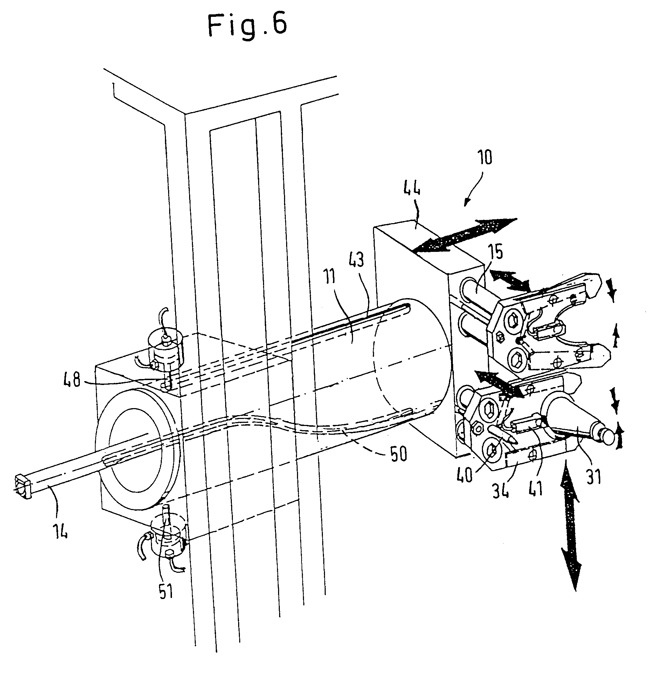

Figur 6 zeigt in schematischer Weise eine weitere vorteilhafte Alternative zu dem Schwenkantrieb 13 in Figur 5, wobei einander entsprechende Teile wiederum mit gleichen Bezugszeichen versehen sind.

Gemäß der Ausführungsvariante nach Figur 6 erfolgt eine einen Wegfall eines separaten Schwenkantriebs ermöglichende Doppelnutzung des Greiferschlittens dergestalt, daß dieser Greiferschlitten mit Führungs- bzw. Steuerkurven 43, 50 sowie mit diesen zusammenwirkenden Steuerbolzen 48, 51 versehen wird. Während die Führungskurve 43 geradlinig, das heißt parallel zur Vorschubrichtung des Greiferschlittens 11 verläuft, besitzt die Steuerkurve 50 eine schraubenlinienförmige Gestalt. Ist eine reine Linearbewegung des Greiferschlittens 11 gefordert, dann wird der Steuerbolzen 48 in die Führungskurve 43 eingesteuert, und eine Betätigung des Greiferschlittenantriebs 14 führt dann auch zu einer entsprechenden Linearverschiebung.

Soll anstelle einer Linearbewegung ein Verschwenken um 90° erfolgen, wie es im Zusammenhang mit der Bedienung einer HV-Maschine erforderlich ist, dann befindet sich der der geradlinigen Führungskurve 43 zugeordnete Steuerbolzen 48 außer Eingriff, und es wird der Steuerbolzen 51 in die gekrümmte Steuerkurve 50 eingesteuert. Bei Betätigung des Greiferschlittenantriebs 14 ergibt sich somit eine Vorschubbewegung kombiniert mit einer entsprechenden Verschwenkbewegung.

Diese Ausführungsform ist insbesondere im Hinblick auf ihre Zuverlässigkeit, die Gewichtsersparnis und die Vereinfachung des Gesamtaufbaus von Vorteil.

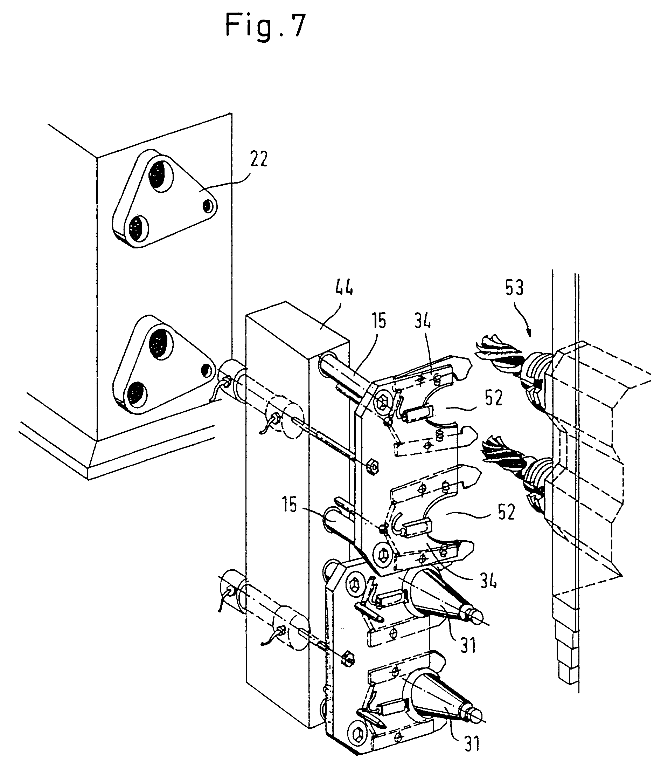

Figur 7 zeigt eine schematische perspektivische Darstellung einer vorteilhaften Ausführungsvariante, bei der an den Greifzangenträgern 15 jeweils eine Doppelaufnahme 52 befestigt ist, so daß auf diese Weise eine Doppelspindelanordnung 53 bedienbar ist.

Der Aufbau der Greiferzangen 34 entspricht dabei dem bereits im Zusammenhang mit Figur 5 erläuterten Aufbau, und auch die Funktionsweise ist analog den bereits beschriebenen Ausführungsformen mit jeweils einer einzigen mit den Greifzangenträgern 15 verbundenen Aufnahmen.

Die dargestellte Anordnung stellt somit einen Doppelwechsler dar, der im Zusammenhang mit Doppelspindel-Bearbeitungszentren vorteilhaft eingesetzt werden kann.

## Patentansprüche

1. Werkzeugmagazin mit zugeordneter Werkzeugwechseleinheit, bestehend aus einem Vertikalregal mit einer Vielzahl von neben- und / oder übereinander angeordneten, als individuelle Trägereinheiten ausgebildeten Halterungen für Werkzeuge, Tastköpfe und dergleichen,
dadurch **gekennzeichnet,**
daß das Vertikalregal eine tragende, als Rasterwand (2) ausgebildete Rückwand aufweist,
daß die Rasterwand (2) mit einer Vielzahl von nach einem vorgebbaren Muster verteilten Kuppelelementen (3) versehen ist,
daß die Trägereinheiten (4, 4') jeweils mit zu den Kuppelelementen (3) der Rasterwand (2) komplementären Kuppelelementen (25) ausgestattet sind, und
daß die Trägereinheiten (4, 4') in frei wählbaren Positionen bei gegenseitigem Eingriff der Kuppelelemente (3, 25) mittels Befestigungsorganen (8) an der Rasterwand (2) fixierbar sind.

2. Werkzeugmagazin nach Anspruch 1,
dadurch **gekennzeichnet,**
daß die Trägereinheiten (4, 4') jeweils zur Aufnahme eines Werkzeugs (5) ausgebildet sind und daß mehrere Trägereinheiten (4, 4') insbesondere mittels einer Verbindungsschiene (6) zu einer gemeinsam handhabbaren Kombinationseinheit (23) zusammenfaßbar und als Kombinationseinheit an der Rasterwand (2) fixierbar sind.

3. Werkzeugmagazin nach Anspruch 1 oder 2,
dadurch **gekennzeichnet,**
daß die zueinander komplementären Kuppelelemente (3, 25) jeweils eine formschlüssig ineinandergreifende Loch-Zapfen-Verbindung bilden.

4. Werkzeugmagazin nach einem der vorhergehenden Ansprüche,
dadurch **gekennzeichnet,**
daß die Kuppelelemente (3) an der Rasterwand (2) in quadratischer Anordnung vorgesehen und die individuellen Trägereinheiten (4, 4') sowohl mit horizontaler als auch mit vertikaler Werkzeugaufnahmeachse kuppel- und fixierbar sind.

5. Werkzeugmagazin nach einem der vorhergehenden Ansprüche,
dadurch **gekennzeichnet,**
daß die Trägereinheiten (4, 4') mit Vorfixierungsorganen, insbesondere in Form von Magneten, Schnapp-Rastelementen und dergleichen versehen und insbesondere mit zumindest einem passiven, abtastbaren Signalisierelement (26) ausgestattet sind.

6. Werkzeugmagazin nach einem der vorhergehenden Ansprüche,
dadurch **gekennzeichnet,**
daß mehrere Kombinationseinheiten (23) mittels insbesondere stirnseitig fixierbarer Koppelleisten (9) zu einer selbständig handhabbaren Einheitengruppe zusammenfaßbar sind.

7. Werkzeugmagazin nach einem der vorhergehenden Ansprüche,
dadurch **gekennzeichnet,**
daß die vorzugsweise aus Kunststoff bestehenden Trägereinheiten (4, 4') eine Kegel- oder Zylinderaufnahme (24) mit parallel zur Befestigungsfläche an der Rasterwand (2) verlaufender Achse aufweisen, daß dieser Aufnahme zumindest hintere Halteschnapper (27) zugeordnet sind, und daß die Aufnahme (24) derart dimensioniert ist, daß die Werkzeuggreifrille (28) an der vorzugsweise als Schrägfläche (29) ausgebildeten Stirnseite der Trägereinheiten (4, 4') für das Einsetzen von Hand frei zugänglich ist, wobei die Trägereinheiten (4, 4') insbesondere an ihrer von der Befestigungsseite abgewandten Seite einen beidseitigen Hintergriff (30) zur Schaffung einer Bajonett-Verbindungsmöglichkeit mit einer entsprechend angepaßten Verbindungsschiene (6) aufweisen.

8. Werkzeugmagazin nach einem der Ansprüche 1 bis 6,
dadurch **gekennzeichnet,**
daß die Trägereinheiten (4, 4') eine eine freie Zugänglichkeit des Werkzeugkegels (31) gewährleistende Rillenaufnahme (32) mit parallel zur Befestigungsfläche verlaufender Achse aufweisen, die sich bezüglich der Horizontalen vorzugsweise unter einem eine Halterung durch Schwerkraft ermöglichenden Winkel (α) öffnet.

9. Werkzeugmagazin nach einem der vorhergehenden Ansprüche,
dadurch **gekennzeichnet,**
daß die Werkzeugwechseleinheit (10) am Vertikalregal geführt und in einer zur Rasterwand (2) parallelen Ebene sowie senkrecht zur Rasterwand (2) verfahrbar ist und vorzugsweise eine Greiferzangenanordnung (34) aufweist, die um eine zur Rasterwand (2) senkrecht verlaufende Achse schwenkbar ist und senkrecht zur Bewegungsbahn des Greiferschlittens (48) ein- und ausfahrbare Greifzangen (34) besitzt.

10. Werkzeugmagazin nach Anspruch 9,
dadurch **gekennzeichnet,**
daß die Werkzeugwechseleinheit (10) gleichzeitig als Werkzeugentnahmeeinheit und bezüglich der Bearbeitungsmaschine (16) als Wechseleinheit dient, wobei vorzugsweise der Schwenkantrieb für die die Greiferzangen (34) tragende Greifergrundplatte (44) aus der Vorschubeinheit (14) für den Greiferschlitten (11) und zumindest einer schraubenförmigen Steuerkurve (50) mit wenigstens einem in diese Kurve eingreifenden, ortsfesten Steuerbolzen (51) besteht, der in Eingriff oder außer Eingriff mit der Steuerkurve (50) bringbar ist.

11. Werkzeugmagazin nach Anspruch 10,
dadurch **gekennzeichnet,**
daß neben der ein Schwenken um 90° ermöglichenden gekrümmten Steuerkurve (50) eine weitere geradlinige Führungskurve (43) mit zugeordnetem Steuerbolzen (48) vorgesehen ist, und daß die beiden Steuerbolzen (48, 51) in Abhängigkeit von der geforderten Bewegung wechselweise in die zugehörigen Kurven einsteuerbar sind.

12. Werkzeugmagazin nach einem der vorhergehenden Ansprüche,
dadurch **gekennzeichnet,**
daß die Werkzeuge (5) mit beschreib- und lesbaren Organen zur Speicherung von werkzeugbezogenen Informationen ausgestattet sind, daß an den Greiferzangen (34) zugehörige Leseköpfe (41) vorgesehen sind, wobei insbesondere die Greifzangenträger (15) jeweils mit einer Doppelaufnahme (52) zur Bedienung von Doppelspindelanordnungen (53) verbunden sind.

## Claims

1. Tool magazine with an associated tool changing unit comprising a vertical rack having a plurality of holders for tool sensing heads and the like arranged alongside and/or above one another and formed as individual carrier units, characterised in that the vertical rack has a load carrying rear wall formed as a grid wall (2); in that the grid wall (2) is provided with a plurality of coupling elements (3) distributed in accordance with a predeterminable pattern; in that the carrier units (4, 4') are respectively equipped with coupling elements (25) complementary to the coupling elements (3) of the grid wall (2), and in that the carrier units (4, 4') can be fixed in freely selectable positions at the grid wall by mutual engagement of the coupling elements (3, 25) by means of fastening members (8).

2. Tool magazine in accordance with claim 1, characterised in that the carrier units (4, 4') are respectively formed to accommodate a tool (5) and in that a plurality of carrier units (4, 4') can be collected together, in particular by means of a connection rail (6) into a jointly handlable combination unit (23) and are fixable to the grid wall (2) as a combination unit.

3. Tool magazine in accordance with claim 1 or claim 2, characterised in that the mutually complementary coupling elements (3, 25) respectively form a hole-spigot connection engaging in one another in form-fitted manner.

4. Tool magazine in accordance with one of the preceding claims, characterised in that the coupling elements (3) are provided at the grid wall (2) in a quadratic arrangement and in that the individual carriers (4, 4') can be coupled and fixed with both a horizontal and also a vertical tool receiving axis.

5. Tool magazine in accordance with one of the preceding claims, characterised in that the carrier units are equipped with prefixation members, in particular in the form of magnets, snap-latch elements and the like and are in particular equipped with a passive scannable signalling element (26).

6. Tool magazine in accordance with one of the preceding claims, characterised in that several combination units (23) can be combined together into an independently handlable unit group, in particular by means of coupling strips (9) fixable to the end face.

7. Tool magazine in accordance with one of the preceding claims, characterised in that the carrier units (4, 4') which preferably consist of plastic have a conical or cylindrical mount (24) with an axis extending parallel to the mounting surface at the grid wall (2); in that at least rear holding snappers (27) are associated with this mount, and in that the mount (24) is dimensioned in such a way that the tool gripping groove (28) at the end face of the carrier units (4, 4') which is preferably formed as an inclined surface (29) is freely accessible for the insertion by hand, with the carrier units (4, 4') having a two-sided rear grip (30), in particular at their side remote from the mounting side, for the provision of a bayonet connection possibility with a correspondingly adapted connection rail (6).

8. Tool magazine in accordance with one of the claims 1 to 6, characterised in that the carrier units (4, 4') have a groove mount (32) with an axis extending parallel to the mounting surface to ensure free accessibility of the tool cone (31), with the mount preferably opening at an angle (α) with respect to the horizontal which permits holding by gravity.

9. Tool magazine in accordance with one of the preceding claims, characterised in that the tool changing unit (10) is guided at the vertical rack and is movable in a plane parallel to the grid wall (2) and also perpendicular to the grid wall (2) and preferably has a gripper jaw arrangement (34) which is pivotable about an axis extending perpendicular to the grid wall (2) and has gripping jaws (34) extendable and retractable perpendicular to the path of movement of the gripper carriage (48).

10. Tool magazine in accordance with claim 9, characterised in that the tool changing unit (10) simultaneously serves as a tool removal unit and serves with respect to the machine tool (16) as a changing unit, with the pivotal drive for the gripper base plate (44) which carries the gripper jaws (34) preferably consisting of the advance unit (14) for the gripper carriage (11) and at least one helical control cam (50) with at least one control pin (51) of fixed location which engages into this cam and can be brought into engagement or out of engagement with the control cam (50).

11. Tool magazine in accordance with claim 10, characterised in that, in addition to the curved control cam (50) which permits pivoting through 90°, a further straight-line guide cam (43) is provided with an associated control pin (48); and in that the two control pins (48, 51) are alternately controllable into the respective cams in dependence on the required movement.

12. Tool magazine in accordance with one of the preceding claims, characterised in that tools (5) are equipped with writable and readable members for storing tool related information; in that associated reading heads (41) are provided on the gripper jaws (34) with the gripper jaw carriers (15) in particular being respectively connected with a double-mount (52) for serving twin spindle arrangements (53).

## Revendications

1. Magasin à outils comprenant une unité de changement d'outils associée, constitué par une étagère verticale avec une pluralité de montures, agencées les unes à côté et /ou au-dessus des autres, réalisées sous la forme d'unités de support individuelles pour des outils, des têtes de mesure, et similaires,
caractérisé en ce que l'étagère verticale comporte une paroi arrière porteuse réalisée sous la forme d'une paroi tramée (2),
en ce que la paroi tramée (2) est pourvue d'une pluralité d'éléments d'accouplement (3) répartis suivant un motif prédéterminé,
en ce que les unités de support (4, 4') sont chacune équipées d'éléments d'accouplement (25) complémentaires des éléments d'accouplement (3) de la paroi tramée (2), et
en ce que les unités de support (4, 4') peuvent être fixées dans des positions librement choisies par engagement mutuel des éléments d'accouplement (3, 25) et au moyen d'organes de fixation (8) sur la paroi tramée (2).

2. Magasin à outils selon la revendication 1, caractérisé en ce que les unités de support (4, 4') sont réalisées chacune pour recevoir un outil (5), et en ce que plusieurs unités de support (4, 4') peuvent être rassemblées, en particulier au moyen d'un rail de raccordement (6) pour former une unité combinée (23) susceptible d'être manipulée conjointement, et peuvent être fixées en tant qu'unité combinée sur la paroi tramée (2).

3. Magasin à outils selon l'une ou l'autre des revendications 1 et 2, caractérisé en ce que les éléments d'accouplement (3, 25) mutuellement complémentaires forment respectivement une liaison à coopération de formes composée d'un doigt et d'un logement en engagement mutuel.

4. Magasin à outils selon l'une quelconque des revendications précédentes, caractérisé en ce que les éléments d'accouplement sont prévus sur la paroi tramée (2) suivant un agencement quadratique, et en ce que les unités de support individuelles (4, 4') peuvent être accouplées et fixées de sorte que l'axe de réception pour les outils est horizontal ou vertical.

5. Magasin à outils selon l'une quelconque des revendications précédentes, caractérisé en ce que les unités de support (4, 4') sont pourvues d'organes de préfixation, en particulier sous la forme d'aimants, d'éléments à encliquetage, et similaires, et en ce qu'elles sont en particulier équipées d'au moins un élément passif de signalisation (26) susceptible d'être interrogé.

6. Magasin à outils selon l'une quelconque des revendications précédentes, caractérisé en ce que plusieurs unités combinées (23) peuvent être rassemblées en un groupe d'unités capable d'être manipulés de façon autonome, en particulier au moyen de barrettes d'accouplement (9) susceptibles d'être fixées du côté frontal.

7. Magasin à outils selon l'une quelconque des revendications précédentes, caractérisé en ce que les unités de support (4, 4'), réalisées de préférence en matière plastique, présentent un logement conique ou cylindrique (24) avec un axe parallèle à la surface de fixation sur la paroi tramée (2), en ce que des éléments d'encliquetage postérieurs (27) au moins sont associés à ce logement, et en ce que le logement (24) a une dimension telle que la rainure de prise (28) pour les outils, sur le côté frontal des unités de support (4, 4'), réalisé de préférence sous la forme d'une surface oblique (29), est librement accessible pour la mise en place à la main, et les unités de support (4, 4') présentent en particulier sur leur côté détourné du côté de fixation un élément de saisie postérieur des deux côtés (30) pour offrir la possibilité d'une liaison à baïonnette avec un rail de liaison (6) adapté de façon correspondante.

8. Magasin à outils selon l'une quelconque des revendications 1 à 6, caractérisé en ce que les unités de support (4, 4') comportent un logement (32) en forme de rainure qui assure une libre accessibilité du cône (31) de l'outil, avec un axe parallèle à la surface de fixation, qui s'ouvre par rapport à l'horizontale sous un angle (α) qui permet de préférence un maintien grâce à la force de gravité.

9. Magasin à outils selon l'une quelconque des revendications précédentes, caractérisé en ce que l'unité de changement d'outils (10) est guidée sur l'étagère verticale et peut être déplacée dans un plan parallèle à la paroi tramée (2) ainsi que perpendiculairement vis-à-vis de la paroi tramée (2), et comporte de préférence un agencement à pinces de saisie (34) capable de basculer autour d'un axe perpendiculaire à la paroi tramée (2), et qui possède des pinces de saisie (34) qui peuvent être rétractées et déployées perpendiculairement au trajet de déplacement du chariot de saisie (48).

10. Magasin à outils selon la revendication 9, caractérisé en ce que l'unité de changement d'outils (10) sert simultanément d'unité de prélèvement d'outils, et vis-à-vis de la machine d'usinage (16) d'unité de changement, où l'entraînement en rotation pour la plaque de base (44) qui porte les pinces de saisie (34) est constitué de l'unité d'avance (14) pour le chariot de saisie (11) et d'au moins une came de commande (50) en forme d'hélice avec au moins un goujon de commande (51) fixe qui pénètre dans cette came et qui peut être amené en engagement ou être dégagé par rapport à la came de commande (50).

11. Magasin à outils selon la revendication 10, caractérisé en ce qu'il est prévu outre la came de commande arquée (50) qui permet un basculement de 90°, une came supplémentaire de guidage rectiligne (43) avec un goujon de commande associé (48), et en ce que les deux goujons de commande (48, 51) peuvent être engagés tour à tour de façon commandée dans les cames associées en fonction du mouvement requis.

12. Magasin à outils selon l'une quelconque des revendications précédentes, caractérisé en ce que les outils (5) sont équipés d'organes inscriptibles et lisibles pour stocker des informations concernant les outils, en ce qu'il est prévu des têtes de lecture (41) associées aux pinces de saisie (34), et en ce que les supports (15) pour les pinces de saisie sont en particulier reliés à un double logement (52) pour desservir des agencements (53) à double broche.
